# EUROPEAN PATENT SPECIFICATION

(11) **EP 2 294 148 B1**
(45) Date of publication and mention of the grant of the patent: **01.02.2012**
(21) Application number: 09761482.0
(22) Date of filing: 10.06.2009
(51) Int. Cl.: C08F 246/00, C08F 230/08, C08F 290/06, C08F 220/28, C09D 157/04, C09D 143/04, C09D 155/00, C09D 133/14, C09D 5/16, C08F 220/14, C09D 133/12

(54) **BINDER FOR ANTIFOULING COATING COMPOSITION AND ANTIFOULING COATING COMPOSITION COMPRISING BINDER**
BINDEMITTEL FÜR ANTIFOULING-LACK UND ANTIFOULING-LACK MIT BINDEMITTEL
LIANT POUR COMPOSITION DE REVÊTEMENT ANTISALISSURE ET COMPOSITION DE REVÊTEMENT ANTISALISSURE COMPRENANT LE LIANT

(30) Priority: 11.06.2008 NO 20082705
(43) Date of publication of application: 16.03.2011
(73) Proprietor: Jotun A/S, 3248 Sandefjord (NO)
(72) Inventor: DAHLING, Marit, N-3218 Sandefjord (NO)
(74) Representative: Campbell, Neil Boyd
(86) International application number: PCT/EP2009/004183
(87) International publication number: WO 2009/149919

(56) References cited:
- EP-A1- 0 489 918
- EP-A1- 1 227 113

## Description

The present invention relates to silyl ester copolymers useful as binders in antifouling coating compositions and antifouling coating compositions comprising the silyl ester copolymers. The invention also relates to a method of preventing fouling on a marine surface using said anti-fouling coating composition.

Surfaces that are submerged in seawater are subjected to fouling by marine organisms such as green and brown algae, barnacles, mussel, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

The most successful antifouling coating system on the market until 2003 was the tributyltin (TBT) self-polishing copolymer systems. The binder system of said antifouling coatings were acrylic copolymers with tributyltin pendant groups, In seawater the polymer gradually hydrolysed releasing tributyltin, which is an effective biologically active compound. The remaining acrylic copolymer, now containing carboxylic acid groups, became sufficiently soluble or dispersible in seawater to be washed out or eroded away from the coating surface. This self-polishing effect provided a controlled release of the biologically active compounds in the coating, resulting in the excellent antifouling efficiency and smooth surfaces and hence reduced frictional resistance.

The IMO Convention "International Convention on the Control of Harmful Anti-fouling Systems on Ships" of 2001 states that it is prohibited to apply new organotin containing antifouling coatings from 2003 and that organotin containing antifouling coatings will be prohibited on ship hulls from 2008.

In recent years new antifouling coating systems have been developed and introduced as a consequence of the organotin ban. One broad group of biocidal antifouling coatings on the market today are the self-polishing antifouling coatings which mimic the triorganotin self-polishing copolymer coatings. Those antifouling coatings are based on copolymers having pendant hydrolysable groups without biocidal properties. The hydrolysis mechanism is the same as in the triorganotin containing copolymers. This should give a controlled dissolution of the polymers and thereby the controlled release of antifouling compounds from the coating film, resulting in similar performance as the triorganotin containing antifouling coating systems. WO 84/02915 discloses various hydrolysable groups as replacement for the triorganotin groups, amongst them the triorganosilyl groups are disclosed.

Experience has shown that the triorganosilyl copolymers have many of the properties associated with the triorganotin copolymer technology, but also certain weaknesses such as inadequate erosion properties as the result of too slow or not controllable hydrolysis, formation of leached layers, i.e. the remains after leaching of soluble components from the film, cracking, loss of adhesion, peeling and flaking after some time of exposure in sea water.

An approach to solve this has been to modify the antifouling coating composition by including various other binders and plasticizers in the antifouling coating composition. For example, EP 0 775 733 describes antifouling coating compositions comprising silyl ester copolymer and chlorinated paraffin; EP 0 802 243 describes antifouling coating compositions comprising a rosin compound and a silyl ester copolymer; EP 1 127 925 describes antifouling compositions comprising a silyl ester copolymer and a hydrophilic copolymer comprising lactam or amide groups; EP 1 277 816 describes antifouling coating compositions comprising a silyl ester copolymer and a metal carboxylate group containing polymer; and WO 03/070832 describes antifouling coating composition comprising a silyl ester copolymer and an incompatible binder.

Another approach has been to include fibres to reinforce the paint film and in particulate the leached layer as described in WO 00/77102.

A third approach to solve this problem has been to modify the silyl ester copolymer by including various co-monomers or by modifying the polymer architecture. For example, EP 0 646 630 describes silyl ester copolymers comprising silyl ester groups and alkoxy-and aryloxypolyethylene groups; EP 1 016 681 describes silyl ester copolymers comprising silyl ester groups and hydroxyl(cyclo)alkyl groups, hydroxypolyalkylene groups or specific (meth)acrylamides; EP 1 127 902 describes silyl ester copolymers comprising silyl ester groups and lactam or amide groups; EP 1 323 745 describes silyl ester copolymers comprising silyl ester groups and metal carboxylate groups; EP 1 201 700 describes (poly)oxyalkylene block silyl ester copolymers; WO 03/080747 describes a silyl ester copolymer comprising a silyl ester monomer containing an alkylene carboxylate spacer unit between the hydrolysable silyl ester group and the polymerisable vinyl group; and NO 2007 3499 describes branched silyl ester copolymers.

Several of the suggested approaches have failed, either due to paint stability, erosion properties and/or coating film properties. Accordingly there is still room for further improvement of silyl ester copolymers and antifouling coating compositions comprising silyl ester copolymers.

The object of the present invention is to provide an improved silyl ester copolymer useful as binder for an antifouling coating compositions. The use of this new silyl ester copolymer gives antifouling coating films with improved physical properties, such as improved flexibility and cracking resistance, peeling resistance, reduced leached layer, controlled self-polishing properties and excellent antifouling performance.

Another object is to provide a method for the regulation of the hydrolysis rate and flexibility of the silyl ester copolymer.

We have discovered that the use of one or more lactone-modified hydroxyalkyl (meth)acrylate monomers in a silyl ester copolymer improves its properties. Moreover, the monomers of the copolymer can be used to control the hydrolysis rate of the silyl ester copolymer. The combination of lactone-modified hydroxyalkyl (meth)acrylates and silyl ester copolymer has not been found described in the prior art. This combination has been shown to solve many of the problems involved with the silyl ester copolymer technology.

### Summary of Invention

Thus, viewed from one aspect the invention provides a silyl ester copolymer comprising repeating units of monomers A, B and optionally C, wherein A is one or more monomers selected from the group consisting of triorganosilyl esters of polymerisable ethylenically unsaturated carboxylic acids,
B is one or more monomers selected from the group consisting of lactone modified hydroxyalkyl (meth)acrylates, and
C is one or more monomers selected from the group consisting of polymerisable ethylenically unsaturated compounds.

Viewed from another aspect the invention provides an antifouling coating comprising a silyl ester copolymer as hereinbefore described.

Viewed from another aspect the invention provides a method for preventing fouling on a marine surface comprising applying to that surface an antifouling coating composition as hereinbefore defined.

Viewed from another aspect the invention provides the use of a silyl ester copolymer as, hereinbefore defined in an antifouling coating or to prevent fouling on a marine surface:

As used herein, the term (meth)acrylate refers to both the acrylate and methacrylate equally and the term lactone-modified hydroxyalkyl (meth)acrylates refers to hydroxyalkyl (meth)acrylates reacted with one or more units of a ring-opened lactone compound.

The use of said silyl ester copolymers in the antifouling coating composition of the present invention has several advantages. The silyl ester copolymers of the invention allow the formation of antifouling coatings with improved flexibility and which therefore, exhibit less cracking tendency.

The controlled hydrolysis will improve the self-polishing properties and will contribute to reduce the leached layer. This will provide a controlled release of biocides and thereby excellent antifouling performance. Both the controlled self-polishing properties and the excellent antifouling performance have several environmental benefits. The controlled self-polishing properties and excellent antifouling performance will give clean hulls with smooth paint surfaces. Those are important factors in reducing the frictional resistance of ships. Reduced frictional resistance will contribute to reduced consumption of bunker fuel and thereby reduced emission to air of sulphur oxide (SOₓ), nitrogen oxide (NOₓ) and carbon dioxide (CO₂), Clean hulls will also prevent the expansion of invasive species.

The use of lactone-modified hydroxyalkyl (meth)acrylates makes it possible to reduce the content of silyl ester monomers and still maintain the copolymer properties such as flexibility, solution viscosity and hydrolysis rate. The silyl ester monomer is the most expensive component in the silyl ester copolymer and a reduction of the silyl ester monomer content will reduce the cost of antifouling coating composition.

The present invention relates to a silyl ester copolymer, useful as binder in an antifouling coating composition, comprising of one or more units corresponding to monomer (A) selected from the group consisting of triorganosilyl esters of polymerisable ethylenically unsaturated carboxylic acids, one or more units corresponding to monomer (B) selected from the group consisting of lactone-modified hydroxyalkyl (meth)acrylates and optionally one or more other units corresponding to monomer (C) selected from the group consisting of polymerisable ethylenically unsaturated compounds.

Monomers (A) in the present invention are preferably defined by the general formula (I): 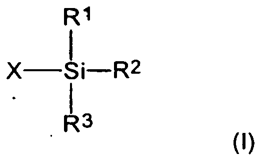 wherein
R¹, R² and R³ are each independently selected from the group consisting of linear or branched C₁₋₂₀ alkyl groups, C₃₋₂₀ cycloalkyl groups and C₆₋₂₀ aryl groups;

X is an ethylenically unsaturated ester group, preferably an ethylenically unsaturated acyloxy group.

Examples of X are acryloyloxy group, methacryloyloxy group, (methacryloyloxy)alkylcarboxy group, maleinoyloxy group, fumaroyloxy group, itaconoyloxy group and citraconoyloxy group.

The aryl groups represented by R¹, R² and R³ include substituted and unsubstituted phenyl, benzyl, phenalkyl and naphthyl. It will be appreciated that the term C6-20-aryl covers a group comprising an aryl unit and optionally other carbon atoms to so as to form, for example, benzyl or phenalkyl.

Preferably R¹, R² and R³ are each C₁₋₆ alkyl or C₆₋₁₀ aryl.

Preferably R¹, R² and R³ are each independently selected from methyl, isopropyl, n-butyl, isobutyl, tert-butyl and phenyl.

More preferably X is selected from acryloyloxy and methacryloyloxy.

It is also preferred if R¹, R² and R³ are all the same.

Monomers (B) in the present invention are preferably defined by the general formula (II): 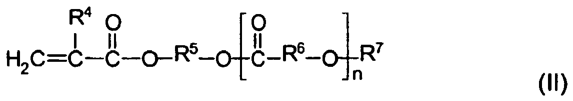 wherein
R⁴ is selected from the group consisting of hydrogen and methyl;
R⁵ is selected from the group consisting of linear, branched or cyclic C₁₋₁₀ alkylene groups;
R⁶ is selected from the group consisting of linear or branched C₂₋₁₂ alkylene groups;
R⁷ is selected from the group consisting of hydrogen, linear or branched C₁₋₂₀ alkyl groups, C₃₋₂₀ cycloalkyl groups and C₆₋₂₀ aryl groups, and -C(O)-R⁸;
R⁸ is selected from the group consisting of linear or branched C₁₋₂₀ alkyl groups, C₃₋₂₀ cycloalkyl groups and C₆₋₂₀ aryl groups;
n is an integer from 1 to 12.

Preferably R⁶ is linear C₃₋₅ alkylene. Preferably R⁷ is hydrogen. R⁵ is preferably C₂₋₄ linear alkylene. The subscript n is preferably an integer from 1 to 5. Preferably monomers B have two or more of these preferred features.

It will be appreciated that Monomers B may contain a distribution of monomers with different numbers of lactone units reacted to the hydroxyalkyl (meth)acrylate unit. The value n may therefore represent an average value of those monomers.

The silyl ester copolymer of the present invention comprises one or more monomers (A) having silyl ester functionality, preferably as defined by the general formula (I). Preferably, this should be present in the amount of 1-99 % by mol of the total mixture of monomers, more preferably 10-60 % by mol, most preferably 15-40% by mol. As noted above, it is an aim of the invention to minimise the monomer A content as this is the most expensive monomer in the copolymer.

The silyl ester copolymer of the present invention comprises one or more monomers (B) having lactone functionality, preferably as defined by the general formula (II). Preferably monomers B are present in the amount of 0.1-50 % by mol of the total mixture of monomers, more preferred 0.5-20 % by mol, most preferred 1-10 % by mol. It has been found that increasing the monomers (B) content encourages faster polishing so control of hydrolysis can be achieved through monomer content control.

It will be appreciated that monomers (B) are most easily formulated by reaction of a hydroxyalkyl(meth)acrylate and a lactone to form a ring opened (i.e. lactone modified) hydroxyalkyl(meth)acrylate. The invention covers however monomers B, however made. As long as they are derivable from a ring opened lactone reaction then such a monomer is within the scope of the invention even if other chemistry may have been used in its synthesis.

The balance of the total mixture of monomers can be completed by one or more monomers (C).

Examples of monomers (A) containing silyl ester functionality defined by the general formula (I) include:
silyl ester monomers of acrylic acid and methacrylic acid, such as triethylsilyl (meth)acrylate, tri-*n*-propylsilyl (meth)acrylate, triisopropylsilyl (meth)acrylate, tri-*n-*butylsilyl (meth)acrylate, triisobutylsilyl (meth)acrylate, tri-*tert*-butylsilyl (meth)acrylate, tri-*sec*-butylsilyl (meth)acrylate, tri-*n*-pentylsilyl (meth)acrylate, triisopentylsilyl (meth)acrylate, tri-n-hexylsilyl (meth)acrylate, tri-*n*-octylsilyl (meth)acrylate, tri-n-dodecylsilyl (meth)acrylate, triphenylsilyl (meth)acrylate, tri-(*p*-methylphenyl)silyl (meth)acrylate, tribenzylsilyl (meth)acrylate, ethyldimethylsilyl (meth)acrylate, *n*-propyldimethylsilyl (meth)acrylate, isopropyldimethylsilyl (meth)acrylate, *n*-butyldimethylsilyl (meth)acrylate, isobutyldimethylsilyl (meth)acrylate, *tert*-butyldimethylsilyl (meth)acrylate, *n-*pentyldimethylsilyl (meth)acrylate, *n*-hexyldimethylsilyl (meth)acrylate, neohexyldimethylsilyl (meth)acrylate, *n*-octyldimethylsilyl (meth)acrylate, *n-*decyldimethylsilyl (meth)acrylate, dodecyldimethylsilyl (meth)acrylate, *n-*octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, *p-*tolyldimethylsilyl (meth)acrylate, isopropyldiethylsilyl (meth)acrylate, n-butyldiisopropylsilyl (meth)acrylate, *n*-octyldiisopropylsilyl (meth)acrylate, methyldi-*n*-butylsilyl (meth)acrylate, methyldicyclohexylsilyl (meth)acrylate, methyldiphenylsilyl (meth)acrylate, *tert-*butyldiphenylsilyl (meth)acrylate;
silyl ester monomers of maleic acid such as triethylsilyl ethyl maleate, tri-*n-*propylsilyl *n*-propyl maleate, triisopropylsilyl methyl maleate, tri-*n*-butylsilyl *n*-butyl maleate and tri-*n*-hexylsilyl *n*-hexyl maleate;
silyl ester monomers of fumaric acid such as triethylsilyl ethyl fumarate, tri-*n-*propylsilyl *n*-propyl fumarate, triisopropylsilyl methyl fumarate, tri-*n*-butylsilyl *n*-butyl fumarate and tri-*n*-hexylsilyl *n*-hexyl fumarate;
silyl esters monomers of carboxyalkyl (meth)acrylate such as triethylsiloxycarbonylmethyl (meth)acrylate, tri-*n*-propylsiloxycarbonylmethyl (meth)acrylate, triisopropylsiloxycarbonylmethyl (meth)acrylate, tri-*n-*butylsiloxycarbonylmethyl (meth)acrylate, triisobutylsiloxycarbonylmethyl (meth)acrylate, tri-*tert*-butylsiloxycarbonylmethyl (meth)acrylate, tri-*sec*-butylsiloxycarbonylmethyl (meth)acrylate, tri-*n*-pentylsiloxycarbonylmethyl (meth)acrylate, triisopentylsiloxycarbonylmethyl (meth)acrylate, tri-*n*-hexylsiloxycarbonylmethyl (meth)acrylate, tri-*n*-octylsiloxycarbonylmethyl (meth)acrylate, tri-*n-*dodecylsiloxycarbonylmethyl (meth)acrylate, triphenylsiloxycarbonylmethyl (meth)acrylate, tri-(p-methylphenyl)siloxycarbonylmethyl (meth)acrylate, tribenzylsiloxycarbonylmethyl (meth)acrylate, ethyldimethylsiloxycarbonylmethyl (meth)acrylate, *n-*propyldimethylsiloxycarbonylmethyl(meth)acrylate, isopropyldimethylsiloxycarbonylmethyl (meth)acrylate, *n*-butyldimethylsiloxycarbonylmethyl (meth)acrylate, isobutyldimethylsiloxycarbonylmethyl (meth)acrylate, *tert-*butyldimethylsiloxycarbonylmethyl (meth)acrylate, *n*-pentyldimethylsiloxycarbonylmethyl (meth)acrylate, *n*-hexyldimethylsiloxycarbonylmethyl (meth)acrylate, neohexyldimethylsiloxycarbonylmethyl (meth)acrylate, *n-*octyldimethylsiloxycarbonylmethyl (meth)acrylate, *n*-decyldimethylsiloxycarbonylmethyl (meth)acrylate, dodecyldimethylsiloxycarbonylmethyl (meth)acrylate, *n-*octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, *p-*tolyldimethylsiloxycarbonylmethyl (meth)acrylate, isopropyldiethylsiloxycarbonylmethyl (meth)acrylate, *n*-butyldiisopropylsiloxycarbonylmethyl (meth)acrylate, *n-*octyldiisopropylsiloxycarbonylmethyl (meth)acrylate, methyldi-n-butylsiloxycarbonylmethyl (meth)acrylate, methyldicyclohexylsiloxycarbonylmethyl (meth)acrylate, methyldiphenylsiloxycarbonylmethyl (meth)acrylate, *tert-*butyldiphenylsiloxycarbonylmethyl (meth)acrylate; and others as described in WO03/080747.

Preferred monomers (A) are triisopropylsilyl (meth)acrylate, tri-n-butylsilyl (meth)acrylate and triisobutylsilyl (meth)acrylate.

Examples of monomers (B) containing lactone functionality defined by the general formula (II) include:
lactone modified hydroxyalkyl (meth)acrylates, e.g. as described in US 3,655,631, US 4,683,287, US 4,916,254 and JP 2000-16967;
and commercially available caprolactone modified hydroxyethyl (meth)acrylates such as the Placcel FM series and the Placcel FA series by Daicel Chemical Industries, Ltd., SR495B by Sartomer Company, Inc. and Bisomer Pemcure 12A by Cognis GmbH.

Preferred monomers (B) are butyrolactone modified hydroxyalkyl (meth)acrylate (cf. formula II; R⁶ is C₃, R⁷ is hydrogen), valerolactone modified hydroxyalkyl (meth)acrylate (cf. formula II; R⁶ is C₄, R⁷ is hydrogen), and caprolactone modified hydroxyalkyl (meth)acrylate (cf. formula II; R⁶ is C₅, R⁷ is hydrogen) .

More preferred monomers (B) are monomers where the hydroxylalkyl (meth)acrylate unit being derived from straight-chain diols having 2 to 4 carbon atoms (cf. formula II; R⁵ is C₂₋₄).

Even more preferred monomers (B) are monomers having an average molecular weight from 210 to 1500 (cf. formula II; n is an integer from 1 to 12).

Most preferred monomers (B) are caprolactone modified hydroxyethyl (meth)acrylates (R⁵ is C₂, R₆ is C₅, R⁷ is hydrogen).

The monomers (C) may comprise any monomer which can be polymerised by free-radical mechanism.

Examples of monomers (C) include:
alkyl esters of acrylic acid and methacrylic acid such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, pentyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate;
cyclic alkyl esters of acrylic acid and methacrylic acid such as cyclohexyl (meth)acrylate, 4-tert-butylcyclohexyl (meth)acrylate, menthyl (meth)acrylate, dicyclopentenyl (meth)acrylate, dicyclopentenyl oxyethyl (meth)acrylate, isobornyl (meth)acrylate;
aryl esters of acrylic acid and methacrylic acid such as phenyl (meth)acrylate, benzyl (meth)acrylate, naphthyl (meth)acrylate;
hydroxyalkyl ester of acrylic acid and methacrylic acid such as 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate;
alkoxyalkyl and poly(alkoxy)alkyl ester of acrylic acid and methacrylic acid such as 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate;
monoalkyl and dialkyl aminoalkyl esters of acrylic acid and methacrylic acid such as 2-(dimethylamino)ethyl (meth)acrylate, 2-(diethylamino)ethyl (meth)acrylate; 3-(dimethylamino)propyl (meth)acrylate, 3-(diethylamino)propyl (meth)acrylate, 2-(tert-butylamino)ethyl (meth)acrylate;
amides of acrylic acid and methacrylic acid such as (meth)acrylamide, *N*-propyl (meth)acrylamide, *N*-isopropyl (meth)acrylamide, *N*-*tert*-butyl (meth)acrylamide, *N*-phenyl (meth)acrylamide, *N*-methylol (meth)acrylamide, *N*-(isobutoxymethyl) (meth)acrylamide, *N*-[3-(dimethylamino)propyl] (meth)acrylamide, diacetone (meth)acrylamide, *N,N*-dimethyl (meth)acrylamide;
metal salts of acrylic acid and methacrylic acid and other metal functional monomers, e.g. as described in EP 1 323 745;
other functional monomers of acrylic acid and methacrylic acid such as (meth)acrylonitrile, (2-acetoacetoxy)ethyl (meth)acrylate and monomers as described in WO 96/41842 and US 4 593 055;
esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;
maleimide and N-substituted maleimides such as maleimide, N-phenyl maleimide and others as described in WO 96/41841;
vinyl esters such as vinyl acetate, vinyl propionate, vinyl butyrate, vinyl pivalate, vinyl dodecanoate, vinyl benzoate, vinyl 4-tert-butylbenzoate, VeoVa™ 9, VeoVa^{™} 10;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and *p*-chlorostyrene;
difunctional monomers such as ethylene glycol di(meth)acrylate, 1,3-butanediol di(meth)acrylate, 1,4-butanediol di(meth)acrylate, 1,5-pentanediol di(meth)acrylate, neopentyl glycol di(meth)acrylate, 1,6-hexanediol di(meth)acrylate, 1,9-nonanediol di(meth)acrylate, 1,10-decandiol di(meth)acrylate, 1,12-dodecandiol di(meth)acrylate, 1,4-cyclohexanediol di(meth)acrylate, cyclohexanedimethanol di(meth)acrylate, tricyclodecanedimethanol di(meth)acrylate, di(ethylene glycol) di(meth)acrylate, tri(ethylene glycol) di(meth)acrylate, tetra(ethylene glycol) di(meth)acrylate, poly(ethylene glycol) di(meth)acrylate, di(propylene glycol) di(meth)acrylate, tri(propylene glycol) di(meth)acrylate, tri(propylene glycol) ethoxylate di(meth)acrylate, neopentyl glycol propoxylate di(meth)acrylate, 1,6-hexanediol ethoxylate di(meth)acrylate, 1,6-hexanediol propoxylate di(meth)acrylate, glycerol di(meth)acrylate, pentaerythritol di(meth)acrylate monostearate, bisphenol A di(meth)acrylate, bisphenol A ethoxylate di(meth)acrylate, bisphenol A propoxylate di(meth)acrylate, 1,4-phenylene di(meth)acrylate, 3-(acryloyloxy)-2-hydroxypropyl methacrylate, allyl meth(acrylate), di(propylene glycol) allyl ether (meth)acrylate, methacrylic anhydride, crotonic anhydride, N,N'-methylene bis(meth)acrylamide, N,N'-ethylene bis(meth)acrylamide, N,N'-hexamethylene bis(meth)acrylamide, diurethane di(meth)acrylate, bis(2-methacryloyloxyethyl) phosphate, barium di(meth)acrylate, copper (II) di(meth)acrylate, magnesium di(meth)acrylate, zinc di(meth)acrylate, divinyl benzene, 1,4-butanediol divinyl ether, 1,6-hexanediol divinyl ether, 1,4-cyclohexanedimethanol divinyl ether, di(ethylene glycol) divinyl ether, tri(ethylene glycol) divinyl ether and poly(ethylene glycol) divinyl ether;
trifunctional monomer such as trimethylolpropane tri(meth)acrylate, trimethylolpropane ethoxylate tri(meth)acrylate, trimethylolpropane propoxylate tri(meth)acrylate and tris(2-hydroxyethyl)isocyanurate tri(meth)acrylate;
and polyfunctional monomers such as di(trimethylolpropane) tetra(meth)acrylate, pentaerythritol tetra(meth)acrylate, pentaerythritol ethoxylate tetra(meth)acrylate, dipentaerythritol penta(meth)acrylate and dipentaerythritol hexa(meth)acrylate.

In one embodiment the silyl ester copolymer of the present invention is prepared by polymerising a mixture of monomers (A), monomers (B) and optionally monomers (C) in the presence of a free-radical polymerisation initiator or catalyst using any of various methods well known and widely used in the art such as solution polymerisation, bulk polymerisation, emulsion polymerisation, and suspension polymerisation. The mixture of monomers may be used to produce random, alternating, block or graft copolymers.

In another embodiment the silyl ester copolymer of the present invention is prepared by a polymer analogous reaction, i.e. modification of a hydroxyl functional silyl ester copolymer with one or more lactone compounds giving a copolymer comprising one or more units corresponding to monomer (A), one or more units corresponding to monomer (B) and optionally one or more other units corresponding to monomer (C).

Preferably the silyl ester copolymer of the present invention is prepared by conventional radical polymerisation with optionally addition of a boost initiator. Addition of a boost initiator may increase the degree conversion of the polymerisation and thereby reducing the amount of unreacted monomers. The boost initiator can be the same or different from the initiator used for the polymerisation. It is selected from the same group of initiators as the polymerisation initiators.

Examples of free-radical polymerisation initiators include azo compounds such as 2,2'-azobis(2-methylbutyronitrile), 2,2'-azobis(isobutyronitrile) and 1,1'-azobis(cyanocyclohexane); peroxides such as *tert*-butyl peroxypivalate, tert-butyl peroxy-2-ethylhexanoate, *tert*-butyl peroxydiethylacetate, *tert*-butyl peroxyisobutyrate, tert-amyl peroxypivalate, *tert*-amyl peroxy-2-ethylhexanoate, 1,1-di(*tert*-amyl peroxy)cyclohexane and dibenzoyl peroxide; and mixtures thereof.

Preferred initiators are the azo initiators and *tert*-amyl peroxides.

In preparing a solvent borne coating composition from the polymer, it is advantageous to dilute the polymer with an organic solvent to obtain a polymer solution having a convenient viscosity for coating production. For this, it is also desirable to employ the solution polymerisation method or bulk polymerisation method.

Preferably, the polymerisation is carried out in a solvent or solvent mixture in which the silyl ester copolymer is soluble and which is suitable for use in the antifouling coating composition. The step of isolating the polymer is then avoided. This will require high conversion in the polymerisation process, preferably above 99%, to avoid unreacted monomers in the polymer solution. The level of unreacted monomers should be as low as possible, preferably below 1%, due to health and safety concerns associated with monomer exposure. The degree of conversion can be increased by addition of boost initiator, increasing the reactor temperature during the post-polymerisation period or a combination of both.

By avoiding the process of isolating the polymers after production, the total amount of solvent used for manufacturing the silyl ester copolymer and the antifouling coating composition comprising the silyl ester copolymer is reduced. This has an environmental benefit and reduces the cost of manufacture.

The silyl ester copolymer of the present invention can be used as a component in an antifouling coating composition.

The antifouling coating composition of the present invention comprises the silyl ester copolymer and one or more other components. Preferably, the antifouling coating composition of the present invention comprises the silyl ester copolymer and one or more biologically active agents. Furthermore, the antifouling coating composition optionally comprises one or more components selected among other binders, pigments, extenders and fillers, dehydrating agents and drying agents, additives and solvents.

The biologically active compounds are any chemical compounds that prevent the settlement and growth of marine organisms.

Example of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate), zinc ethylenebis(dithiocarbamate), manganese ethylenebis(dithiocarbamate) and manganese ethylene bis(dithiocarbamate) complexed with zinc salt;

Examples of organic biologically active compounds include heterocyclic compounds such as 2-(tert-butylamino)-4-(cyclopropylamino)-6-(methylthio)-1,3,5-triazine, 4,5-dichloro-2-n-octyl-4-isothiazolin-3-one, 1,2-benzisothiazolin-3-one, 2-(thiocyanatomethylthio)-1,3-benzothiazole and 2,3,5,6-tetrachloro-4-(methylsulphonyl)pyridine; urea derivatives such as 3-(3,4-dichlorophenyl)-1,1-dimethylurea; amides and imides of carboxylic acids, sulphonic acids and sulphenic acids such as *N*-(dichlorofluoromethylthio)phthalimide, *N*-dichlorofluoromethylthio-*N',N"-*dimethyl-*N*-phenylsulfamide, *N*-dichlorofluoromethylthio-*N',N'*-dimethyl-*N*-*p*-tolylsulfamide and *N*-(2,4,6-trichlorophenyl)maleimide; other organic compounds such as pyridine triphenylborane, amine triphenylborane, 3-iodo-2-propynyl N-butylcarbamate, 2,4,5,6-tetrachloroisophthalonitrile and p-((diiodomethyl)sulphonyl)toluene.

Other examples may be tetraalkylphosphonium halogenides and guanidine derivatives, imidazole containing compounds such as medetomidine and derivatives and enzymes such as oxidase, proteolytically, hemicellulolytically, cellulolytically, lipolytically and amylolytically active enzymes.

Optionally the biologically active compounds may be encapsulated, adsorbed on an inert carrier or bonded to other materials for controlled release.

The biologically active compounds may be used alone or in mixtures.

In addition to the silyl ester copolymer and biologically active compounds the antifouling coating composition according to the present invention optionally comprise one or more components selected among other binders, pigments, extenders and fillers, dehydrating agents and drying agents, additives, solvents and thinners.

An additional binder can be used to adjust the self-polishing properties and the mechanical properties of the antifouling coating film.

Examples of binders that can be used in addition to the silyl ester copolymer in the antifouling coating composition according to the present invention include:
rosin material such as wood rosin, tall oil rosin and gum rosin; rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin;
other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0 526 441;
(meth)acrylic polymers and copolymers, such as poly(n-butyl acrylate), poly(n-butyl acrylate-co-isobutyl vinyl ether);
vinyl ether polymers and copolymers, such as poly(methyl vinyl ether), poly(ethyl vinyl ether), poly(isobutyl vinyl ether), poly(vinyl chloride-co-isobutyl vinyl ether);
polyesters for example as described in EP 1 033 392 and EP 1 072 625;
alkyd resins and modified alkyd resins;
other condensation polymers as described in WO 96/14362.

Preferably, the other binder is a rosin material.

The silyl ester copolymer is sensitive to hydrolysis in the presence of water. The dehydrating agents and drying agents are contributing to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and drying agents that may be used in the antifouling coating composition according to the present invention include organic and inorganic compounds. Examples of dehydrating agents and drying agents include anhydrous calcium sulphate, anhydrous magnesium sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-fert-butyl borate; silicates such as trimethoxymethyl silane, tetraethyl silicate and ethyl polysilicate; and isocyanates, such as p-toluenesulfonyl isocyanate.

The preferred dehydrating agents and drying agents are the inorganic compounds and silicates.

Examples of pigments are inorganic pigments such as titanium dioxide, iron oxides, zinc oxide, zinc phosphate, graphite and carbon black; and organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas; organo-modified clays, amide derivatives, amide waxes, polyamide waxes, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

Examples of organic solvents and thinners are aromatic hydrocarbons such as xylene, toluene, mesitylene; ketones such as methyl ethyl ketone, methyl isobutyl ketone, methyl isoamyl ketone, cyclopentanone, cyclohexanone; esters such as butyl acetate, tert-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran; alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Alternatively the coating can be dispersed in an organic non-solvent for the film-forming components in the coating composition or on an aqueous dispersion.

The content of volatile organic compounds (VOCs) in coating composition is restricted by legislation in many countries. For example, the "National Emission Standards for Hazardous Air Pollutants for Shipbuilding and Ship Repair (Surface Coating) Operations" in the United States of America establishes maximum allowable levels of volatile organic compounds (VOCs) in antifouling coatings. The current allowable VOC level for antifouling coatings in regulated facilities is 400 g/L.

There are various ways to reduce the VOC content in the antifouling coating composition. An important factor is to maintain a low solution viscosity of the silyl ester copolymer solution when increasing the solids content. The copolymer solution viscosity can easily be adjusted by adjusting the polymer average molecular weight and/or adjusting the polydispersity of polymers, changing the polymer architecture or making non-aqueous dispersions. The solvents or solvent mixtures may also be used to adjust the copolymer solution viscosity to some extent.

A common approach for reducing the solution viscosity of linear polymers is to reduce the molecular weight and/or reduce the polydispersity of the polymer. The polymerisation temperature, the initiator efficiency, the amount of initiator and the addition of chain transfer agents are important parameters that influence the molecular weight of the copolymer.

Chain transfers agents are commonly used to reduce the molecular weight. Example of chain transfer agents are monofunctional and multifunctional thiol compounds and other compounds as described in NO 2007 3499. The use of multifunctional chain transfer agents will additionally introduce a low degree of long chain branching in the polymer as described in WO 96/03465.

Another approach is to change the polymer architecture. It is well known that the polymer architecture will influence the polymer properties. Branching in polymers is a useful structural variable that can be used advantageously to modify polymer properties such as glass transition temperature (T_{g}), flexibility, solution viscosity and miscibility in polymer blends. NO 2007 3499 describes branched silyl ester copolymers obtained by combining monomers containing one polymerisable unit, monomers containing two or more polymerisaible units and chain transfer agents. WO 96/03465 describes star shaped polymers obtained by using polyfunctional chain transfer agents or polyfunctional initiators.

A third approach for reducing the solution viscosity is the use of non-aqueous dispersions (NAD). WO 03/027194 and WO 2005/042649 describe the preparation and stabilisation of non-aqueous dispersions and their use in antifouling coating compositions.

Water borne coating compositions are also an approach to reduce the VOC content of the antifouling coating composition. The preferred method for preparing waterborne silyl ester copolymer solutions is to emulsify a solvent borne silyl ester copolymer solution in water and strip off the solvents.

All the above mentioned approaches for reducing the VOC content of the antifouling coating composition can be applied to the silyl ester copolymer of the present invention.

A well known approach for reducing the VOC content of the coating formulations is the use of spherical extenders such as glass microspheres. This approach and other approaches well known and widely used to reduce the VOC in coating compositions can be applied to the antifouling coating compositions of the present invention.

The invention will now be described with reference to the following non limiting examples.

### Copolymer solutions

### General procedure for preparation of copolymer solution with post-heating

A quantity of solvent is charged to a temperature-controlled reaction vessel equipped with a stirrer, a condenser, a nitrogen inlet and a feed inlet. The reaction vessel is heated and maintained at the reaction temperature of 85°C. A pre-mix of monomers, optional chain transfer agent, initiator and solvent is prepared. The pre-mix is charged to the reaction vessel at a constant rate over 2 hours under a nitrogen atmosphere. After a further 1 hour, post-addition of a boost initiator solution is added. The reaction vessel is maintained at the reaction temperature of 85°C for a further 2 hours. The temperature is then increased to 120°C, maintained at that temperature for a further 30 minutes and then cooled to room temperature.

Copolymer solutions S1 to S8 are prepared according to this procedure.

### General procedure for preparation of copolymer solution

A quantity of solvent is charged to a temperature-controlled reaction vessel equipped with a stirrer, a condenser, a nitrogen inlet and a feed inlet. The reaction vessel is heated and maintained at the reaction temperature of 85°C. A pre-mix of monomers, optional chain transfer agent, initiator and solvent is prepared. The pre-mix is charged to the reaction vessel at a constant rate over 2 hours under a nitrogen atmosphere. After a further 1 hour, post-addition of a boost initiator solution is added. The reaction vessel is maintained at the reaction temperature of 85°C for a further 2 hours and is then cooled to room temperature.

Copolymer solution Comp. 2 is prepared according to this procedure.

### Determination of Polymer solution viscosity

The viscosity of the polymers are determined in accordance with ASTM D2196 using a Brookfield DV-I viscometer with LV-2 or LV-4 spindle at 12 rpm. The polymers are temperated to 23.0°C ± 0.5°C before the measurements.

### Determination of solids content of the Polymer solutions

The solids content in the polymer solutions are determined in accordance with ISO 3251. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

### Determination of Polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 µm Mixed-D columns from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs.

Samples were prepared by dissolving an amount of polymer solution corresponding to 25 mg dry polymer in 5 mL THF. The samples were kept for minimum 3 hours at room temperature prior to sampling for the GPC measurements.

The weight-average molecular weight (Mw), the number-average molecular weight (Mn) and the polydispersity index (PDI), given as Mw/Mn, are reported in the tables.

### Determination of the glass transition temperature

The glass transition temperature (Tg) is obtained by Differential Scanning Calorimetry (DSC) measurements. The DSC measurements were performed on a TA Instruments DSC Q200. Samples were prepared by transfering a small amount of polymer solution to an aluminium pan and dry the samples for minimum 10 h at 50°C and 3 h at 150°C The samples of approx. 10 mg dry polymer material were meassured in open aluminum pans and scans were recorded at a heating rate of 10°C/min and cooling rate of 5°C/min with an empty pan as reference. The data were processed using Universal Analysis software from TA Instruments.

The inflection point of the glass transition range, as defined in ASTM E1356-08, of the second heating is reported as the Tg of the polymers.

The following abbreviations are used in Table 1 to Table 3:
- TiPSA: triisopropylsilyl acrylate
- CLA-2: caprolactone modified hydroxyethyl acrylate, average Mw 344
- CLMA: caprolactone modified hydroxyethyl methacrylate, average Mw 244
- CLMA-2: caprolactone modified hydroxyethyl methacrylate, average Mw 358
- CLMA-3: caprolactone modified hydroxyethyl methacrylate, average Mw 472
- MMA: methyl methacrylate
- n-BA: n-butyl acrylate
- AMBN: 2,2'-azodi(2-methylbutyronitrile)
- B3MP: butyl 3-mercaptopropionate

**Table 1: Ingredients in parts by weight and properties of the silyl ester copolymer solutions S1 to S4. The monomer compositions in parts by mol are given in brackets.**

| | | | **S-1** | **S-2** | **S-3** | **S-4** |
|---|---|---|---|---|---|---|
| Reactor charge | Solvent | Xylene | 31.50 | 31.53 | 31.53 | 31.56 |
| Pre-mix charge | Monomers | TiPSA | 24.43 [30.0] | 23.43 [30.0] | 27.34 [35.0] | 26.27 [35.0] |
| | | CLA-2 ⁽¹⁾ | 6.14 [5.0] | 8.83 [7.5] | 5.89 [5.0] | 8.49 [7.5] |
| | | MMA | 23.20 [65.0] | 21.40 [62.5] | 20.55 [60.0] | 18.92 [57.5] |
| | Chain transfer agents | B3MP | 0.23 | 0.33 | 0.22 | 0.32 |
| | Initiator | AMBN | 0.56 | 0.54 | 0.54 | 0.52 |
| | Solvent | Xylene | 9.20 | 9.20 | 9.20 | 9.20 |
| Boost charge | Initiator | AMBN | 0.14 | 0.13 | 0.13 | 0.13 |
| | Solvent | Xylene | 4.60 | 4.60 | 4.60 | 4.60 |
| Properties of copolymer solutions | Actual NVM (wt%) | | 54.7 | 54.7 | 54.5 | 54.3 |
| | Viscosity (cP) | | 910 | 695 | 635 | 510 |
| | Mw (D) | | 43,067 | 43,815 | 40,283 | 39,806 |
| | PDI | | 5.29 | 5.68 | 5.15 | 5.37 |
| | Tg (°C) | | 31.0 | 21.2 | 28.2 | 18.5 |

| | | | | | | |
|---|---|---|---|---|---|---|
| (1) Available as SR495 from Sartomer. | | | | | | |

The results in Table 1 show that by increasing the amount of CLA-2 in the silyl ester copolymer composition, the Tg-values are lowered, i.e. the polymer films will have increased flexibility.

**Table 2: Ingredients in parts by weight and properties of the silyl ester copolymer solutions S5 to S8. The monomer compositions in parts by mol are given in brackets.**

| | | | **S-5** | **S-6** | **S-7** | **S-8** |
|---|---|---|---|---|---|---|
| Reactor charge | Solvent | Xylene | 31.54 | 34.38 | 34.39 | 34.41 |
| Pre-mix charge | Monomers | TiPSA | 28.71 [37.5] | 27.44 [37.5] | 26.47 [37.5] | 25.57 [37.5] |
| | | CLA-2 ⁽¹⁾ | 5.77 [5.0] | | | |
| | | CLMA ⁽²⁾ | | 3.91 [5.0] | | |
| | | CLMA-2 ⁽³⁾ | | | 5.53 [5.0] | |
| | | CLMA-3 ⁽⁴⁾ | | | | 7.05 [5.0] |
| | | MMA | 19.30 [57.5] | 18.44 [57.5] | 17.79 [57.5] | 17.19 [57.5] |
| | Chain transfer agents | B3MP | 0.22 | 0.21 | 0.20 | 0.19 |
| | Initiator | AMBN | 0.53 | 0.50 | 0.49 | 0.47 |
| | Solvent | Xylene | 9.20 | 10.00 | 10.00 | 10.00 |
| Boost charge | Initiator | AMBN | 0.13 | 0.12 | 0.12 | 0.12 |
| | Solvent | Xylene | 4.60 | 5.00 | 5.00 | 5.00 |
| Properties of copolymer solutions | Actual NVM (wt%) | | 54.2 | 50.6 | 49.7 | 50.9 |
| | Viscosity (cP) | | 515 | 365 | 248 | 280 |
| | Mw (D) | | 38,496 | 34,327 | 24,587 | 27,585 |
| | PDI | | 5.03 | 4.79 | 3.60 | 3.74 |
| | Tg (°C) | | 26.9 | 39.4 | 28.7 | 25.8 |

| | | | | | | |
|---|---|---|---|---|---|---|
| (1) Available as Sartomer SR495 from Sartomer. (2) Available as Caprolactone 2-(methacrylolyoxy)ethyl ester from Sigma Aldrich (3) Available as Placcel FM2D from Daicel Chemical Industries, Ltd. (4) Available as Placcel FM3 from Daicel Chemical Industries, Ltd. | | | | | | |

The results in Table 2 show that the Tg-value of the polymer decrease, i.e. the flexibility of the polymer films, increase with increasing number of caprolactone units in the monomer.

**Table 3: Ingredients in parts by weight and properties of the copolymer solutions of the comparative examples.**

| | | | **Comp. 1** | **Comp. 2** |
|---|---|---|---|---|
| Reactor charge | Solvent | Xylene | Commercial silyl ester copolymer Composition not available | 34.20 |
| Pre-mix charge | Monomers | n-BA | | 5.23 |
| | | CLA-2 ⁽¹⁾ | | 10.55 |
| | | MMA | | 33.72 |
| | Chain transfer agent | B3MP | | 0.50 |
| | Initiator | AMBN | | 0.64 |
| | Solvent | Xylene | | 10.00 |
| Boost charge | Initiator | AMBN | | 0.16 |
| | Solvent | Xylene | | 5.00 |
| Properties of copolymer solutions | Actual NVM (wt%) | | 50* | 50.7 |
| | Viscosity (cP) | | 300 * | 1,390 |
| | Mw (D) | | 50,000 * | 38,714 |
| | PDI | | n.a. | 4.84 |
| | Tg (°C) | | 49 * | 35.2 |

| | | | | |
|---|---|---|---|---|
| (1) Available as Sartomer SR495 from Sartomer. | | | | |

### Coating compositions

### General procedure for preparation of antifouling coating composition

The ingredients are mixed and ground to a fineness of < 30 µm using a high-speed disperser. Any ingredients sensitive to the high shear forces and temperature in the grinding process is added in the let-down. The general compositions of the coating compositions are presented in Table 4.

### Determination of the viscosity of the antifouling coating composition

The high-shear viscosity of the antifouling coating composition is determined in accordance with ASTM D4287 using a cone-plate viscometer.

### Calculation of the volatile organic compound (VOC) content of the antifouling coating composition

The volatile organic compound (VOC) content of the antifouling coating composition is calculated in accordance with ASTM D5201.

### Determination of Polishing rates of antifouling coating films in sea water

The polishing rate is determined by measuring the reduction in film thickness of a coating film over time. For this test PVC disc are used. The coating compositions are applied as radial stripes on the disc using a film applicator. The thickness of the dry coating films are measured by means of a suitable electronic film thickness gauge. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

The test is run for 12 to 26 weeks, depending on the paint formulation. In the cases where a linear reduction in film thickness is observed, the polishing rate is calculated and the result is given with in µm/month or µm/year. The result obtained at the disc position corresponding to a rotational speed of 16 knots is reported.

**Table 4: Ingredients of the coating composition Coat#1**

| | | **Coat #1a** | **Coat #1b** |
|---|---|---|---|
| Binder | Silyl ester copolymer solution (50% in xylene) | 24.0 | - |
| | Silyl ester copolymer solution (54% in xylene) | - | 22.2 |
| | Rosin solution (60% in xylene) | 3.6 | 3.6 |
| Biocides | Cuprous oxide | 38.4 | 38.4 |
| | Copper pyrithione | 1.5 | 1.5 |
| Pigments | Iron oxide red | 1.8 | 1.8 |
| | Titanium dioxide | 1.0 | 1.0 |
| Extenders | Zinc oxide red seal | 4.6 | 4.6 |
| | Barium sulfate | 6.8 | 6.8 |
| | Magnesium carbonate | 3.7 | 3.7 |
| Dehydrating agents | Calcium sulfate | 1:1 | 1.1 |
| Thixotropic agents | Disparlon A603-20X ⁽¹⁾ | 4.2 | 4.2 |
| | Disparlon 4401-25X ⁽²⁾ | 0.5 | 0.5 |
| Solvent | Xylene | 8.8 | 10.6 |
| Calculated NVM (vol%) | | 48.0 | 48.0 |
| Calculated VOC (g/L) | | 472 | 472 |

| | | | |
|---|---|---|---|
| (1) Disparlon A603-20X, amide wax, 20% in xylene; available from Kusumoto Chemicals, Ltd. (2) Disparlon 4401-25X, oxidized polyethylene wax, 25% in xylene; available from Kusumoto Chemicals, Ltd. | | | |

An overview of the copolymer solutions used and the coating properties are presented in following tables.

**Table 5: Properties of coating compositions C1 to C5**

| Coating number | Coating composition | | Coating properties | |
|---|---|---|---|---|
| | Coating formulation | Copolymer solution | Viscosity (cP) | Polishing rate (µm/year) |
| C1 | Coat #1b | S-1 | 220 | 12 |
| C2 | Coat #1b | S-2 | 240 | 20 |
| C3 | Coat #1b | S-3 | 200 | 16 |
| C4 | Coat #1b | S-4 | 210 | 27 |
| C5 | Coat #1a | Comp. 2 | n.a. | 0 |

The results in Table 5 show that the polishing rates of the coating films increase significantly with increasing content of CLA-2 in the silyl ester copolymer solution. The comparative example without silyl ester monomer shows no sign of polishing. It demonstrate that the lactone modified hydroxyalkyl (meth)acrylates do not establish polishing of coating film itself when present in an acrylic copolymer, but enhance the polishing properties of the coating film when present in a silyl ester copolymer.

**Table 6: Properties of coating compositions C6 to C10**

| Coating number | Coating composition | | Coating properties | |
|---|---|---|---|---|
| | Coating formulation | Copolymer solution | Viscosity (cP) | Polishing rate (µm/year) |
| C6 | Coat #1b | S-5 | 190 | 20 |
| C7 | Coat #1a | S-6 | 180 | 22 |
| C8 | Coat #1a | S-7 | 180 | 17 |
| C9 | Coat #1a | S-8 | 180 | 16 |
| C10 | Coat #1a | Comp. 1 | n.a. | 16 |

The results in Table 6 show that the appropriate polishing rates can be obtained for various caprolactone modified hydroxyethyl (meth)acrylates in the silyl ester copolymers. Polishing rates similar to the commercial reference can also be obtained.

## Claims

1. A silyl ester copolymer comprising repeating units of monomers A, B and optionally C, wherein
A is one or more monomers selected from the group consisting of triorganosilyl esters of polymerisable ethylenically unsaturated carboxylic acids,
B is one or more monomers selected from the group consisting of lactone modified hydroxyalkyl (meth)acrylates, and
C is one or more monomers selected from the group consisting of polymerisable ethylenically unsaturated compounds.

2. A silyl ester copolymer according to claim 1, wherein monomer (A) is defined by the general formula (I): 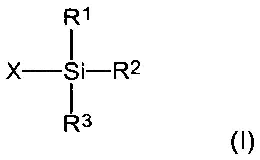 wherein
R¹, R² and R³ are each independently selected from the group consisting of linear or branched C₁₋₂₀ alkyl groups, C₃₋₂₀ cycloalkyl groups and C₆₋₂₀ aryl groups;
X is an ethylenically unsaturated ester group, preferably an ethylenically unsaturated acyloxy group.

3. A silyl ester copolymer according to claim 2, wherein the ethylenically unsaturated group X is selected from acryloyloxy group, methacryloyloxy group, (methacryloyloxy)alkylcarboxy group, maleinoyloxy group, fumaroyloxy group, itaconoyloxy group and citraconoyloxy group.

4. A silyl ester copolymer according to any of claims 2 or 3, wherein R¹, R² and R³ are each independently selected from methyl, isopropyl, n-butyl, isobutyl and phenyl.

5. A silyl ester copolymer according to any of claims 1 to 4, wherein monomer A is triisopropylsilyl (meth)acrylate, tri-n-butylsilyl (meth)acrylate or triisobutylsilyl (meth)acrylate.

6. A silyl ester copolymer according to any of claims 1 to 5, wherein monomer B is defined by the general formula (II): 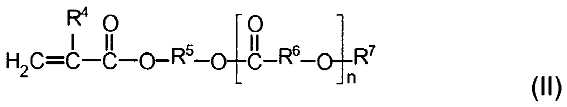 wherein
R⁴ is selected from the group consisting of hydrogen and methyl;
R⁵ is selected from the group consisting of linear, branched or cyclic C₁₋₁₀ alkylene groups;
R⁶ is selected from the group consisting of linear or branched C₂₋₁₂ alkylene groups; R⁷ is selected from the group consisting of hydrogen, linear or branched C₁₋₂₀ alkyl groups, C₃₋₂₀ cycloalkyl groups and C₆₋₂₀ aryl groups, and -C(O)-R⁸;
R⁸ is selected from the group consisting of linear or branched C₁₋₂₀ alkyl groups, C₃₋₂₀ cycloalkyl groups and C₆₋₂₀ aryl groups;
n is an integer from 1 to 12, preferably 1 to 5.

7. A silyl ester copolymer according to claim 6, wherein R⁶ is linear C₃₋₅ alkylene and R⁷ is hydrogen; and/or R⁵ is C₂₋₄ alkylene.

8. A silyl ester copolymer according to any of claims 1 to 7, wherein monomer (B) is butyrolactone modified hydroxyalkyl (meth)acrylate, caprolactone modified hydroxyalkyl (meth)acrylate or valerolactone modified hydroxyalkyl (meth)acrylate.

9. A silyl ester copolymer according to any of claims 1 to 8, wherein monomer (B) is caprolactone modified hydroxyethyl (meth)acrylate.

10. A silyl ester copolymer according to any of claims 1 to 9, wherein monomer (B) has an average molecular weight from 210 to 1500.

11. A silyl ester copolymer according to any of claims 1 to 9, wherein one or more units of monomers (A) is present in an amount of 1-99 % by mol of the total mixture of monomers, more preferred 10-60 % by mol, most preferred 15-40% by mol.

12. A silyl ester copolymer according to any of claims 1 to 10, wherein units of one or more monomers (B) are present in an amount of 0.1-50 % by mol of the total mixture of monomers, more preferred 0.5-20% by mol, more preferred 1-10% by mol.

13. An antifouling coating composition comprising a silyl ester copolymer according to any of claims 1 to 12, and one or more other components, preferably one or more other biologically active agents.

14. An antifouling coating composition according to claim 13, additionally comprising one or more components selected from other binders (preferably selected from rosin and rosin derivatives), pigments, extenders and fillers, dehydrating agents and drying agents, additives and solvents.

15. An antifouling coating composition according to any of claims 13 and 14, having a volatile organic compounds content below 400 g/L.

## Patentansprüche

1. Ein Silylestercopolymer, umfassend Wiederholungseinheiten der Monomere A, B und gegebenenfalls C, wobei
A ein oder mehrere Monomere ist, ausgewählt aus der Gruppe, bestehend aus Triorganosilylestern von polymerisierbaren ethylenisch ungesättigten Carbonsäuren,
B ein oder mehrere Monomere ist, ausgewählt aus der Gruppe, bestehend aus mit Lacton modifizierten Hydroxyalkyl(meth)acrylaten, und
C ein oder mehrere Monomere ist, ausgewählt aus der Gruppe, bestehend aus polymerisierbaren ethylenisch ungesättigten Verbindungen.

2. Ein Silylestercopolymer gemäß Anspruch 1, wobei Monomer (A) durch die allgemeine Formel (I) definiert ist: 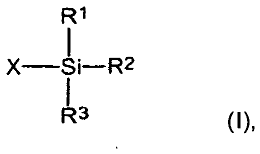 wobei
R¹, R² und R³ jeweils unabhängig ausgewählt sind aus der Gruppe, bestehend aus linearen oder verzweigten C₁₋₂₀-Alkylgruppen, C₃₋₂₀-Cycloalkylgruppen und C₆₋₂₀-Arylgruppen, X eine ethylenisch ungesättigte Estergruppe ist, vorzugsweise eine ethylenisch ungesättigte Acyloxygruppe.

3. Ein Silylestercopolymer gemäß Anspruch 2, wobei die ethylenisch ungesättigte Gruppe X ausgewählt ist aus Acryloyloxygruppe, Methacryloyloxygruppe, (Methacryloyloxy)alkylcarboxygruppe, Maleinoyloxygruppe, Fumaroyloxygruppe, Itaconoyloxygruppe und Citraconoyloxygruppe.

4. Ein Silylestercopolymer gemäß einem der Ansprüche 2 oder 3, wobei R¹, R² und R³ jeweils unabhängig ausgewählt sind aus Methyl, Isopropyl, n-Butyl, Isobutyl und Phenyl.

5. Ein Silylestercopolymer gemäß einem der Ansprüche 1 bis 4, wobei Monomer A Triisopropylsilyl(meth)acrylat, Tri-n-butylsilyl(meth)acrylat oder Triisobutylsilyl(meth)acrylat ist.

6. Ein Silylestercopolymer gemäß einem der Ansprüche 1 bis 5, wobei Monomer B durch die allgemeine Formel (II) definiert ist: 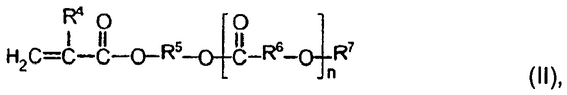 wobei
R⁴ ausgewählt ist aus der Gruppe, bestehend aus Wasserstoff und Methyl,
R⁵ ausgewählt ist aus der Gruppe, bestehend aus linearen, verzweigten oder cyclischen C₁₋₁₀)-Alkylengruppen,
R⁶ ausgewählt ist aus der Gruppe, bestehend aus linearen oder verzweigten C₂₋₁₂-Alkylengruppen,
R⁷ ausgewählt ist aus der Gruppe, bestehend aus Wasserstoff, linearen oder verzweigten C₁₋₂₀-Alkylgruppen, C₃₋₂₀-Cycloalkylgruppen und C₆₋₂₀-Arylgruppen, und -C(O)-R⁸,
R⁸ ausgewählt ist aus der Gruppe, bestehend aus linearen oder verzweigten C₁₋₂₀-Alkylgruppen, C₃₋₂₀-Cycloalkylgruppen und C₆₋₂₀-Arylgruppen,
n eine ganze Zahl von 1 bis 12 ist, vorzugsweise 1 bis 5.

7. Ein Silylestercopolymer gemäß Anspruch 6, wobei R⁶ lineares C₃₋₅-Alkylen ist und R⁷ Wasserstoff ist, und/oder R⁵ C₂₋₄-Alkylen ist.

8. Ein Silylestercopolymer gemäß einem der Ansprüche 1 bis 7, wobei Monomer (B) mit Butyrolacton modifiziertes Hydroxyalkyl(meth)acrylat, mit Caprolacton modifiziertes Hydroxyalkyl(meth)acrylat oder mit Valerolacton modifiziertes Hydroxyalkyl(meth)acrylat ist.

9. Ein Silylestercopolymer gemäß einem der Ansprüche 1 bis 8, wobei Monomer (B) mit Caprolacton modifiziertes Hydroxyethyl(meth)acrylat ist.

10. Ein Silylestercopolymer gemäß einem der Ansprüche 1 bis 9, wobei Monomer (B) ein mittleres Molekulargewicht von 210 bis 1500 besitzt.

11. Ein Silylestercopolymer gemäß einem der Ansprüche 1 bis 9, wobei eine oder mehrere Einheiten der Monomere (A) in einer Menge von 1-99 Mol-%, bezogen auf die Gesamtmischung aus Monomeren, vorzugsweise 10-60 Mol-%, besonders bevorzugt 15-40 Mol-% vorliegen.

12. Ein Silylestercopolymer gemäß einem der Ansprüche 1 bis 10, wobei Einheiten aus einem oder mehreren Monomeren (B) in einer Menge von 0,1-50 Mol-%, bezogen auf die Gesamtmischung aus Monomeren, vorzugsweise 0,5-20 Mol-%, besonders bevorzugt 1-10 Mol-% vorliegen.

13. Eine Antifouling-Beschichtungszusammensetzung, die ein Silylestercopolymer gemäß einem der Ansprüche 1 bis 12 und ein oder mehrere andere Komponenten, vorzugsweise ein oder mehrere andere biologisch aktive Mittel, enthält.

14. Eine Antifouling-Beschichtungszusammensetzung gemäß Anspruch 13, die zusätzlich ein oder mehrere Komponenten enthält, ausgewählt aus anderen Bindemitteln (vorzugsweise ausgewählt aus Harz oder Harzderivaten), Pigmenten, Streckmitteln und Füllstoffen, Dehydratisierungsmitteln und Trockenmitteln, Additiven und Lösungsmitteln.

15. Eine Antifouling-Beschichtungszusammensetzung gemäß einem der Ansprüche 13 und 14 mit einem Gehalt an flüchtigen organischen Verbindungen von weniger als 400 g/I.

## Revendications

1. Copolymère d'ester de silyle comprenant des motifs répétés de monomères A, B et facultativement C, dans lequel
A est constitué d'un ou plusieurs monomères choisis dans le groupe constitué par les esters de triorganosilyle d'acides carboxyliques éthyléniquement insaturés polymérisables,
B est constitué d'un ou plusieurs monomères choisis dans le groupe constitué par les (méth)acrylates d'hydroxyalkyle modifiés par lactone, et
C est constitué d'un ou plusieurs monomères choisis dans le groupe constitué par les composés éthyléniquement insaturés polymérisables.

2. Copolymère d'ester de silyle selon la revendication 1, dans lequel le monomère A est défini par la formule générale (I) : 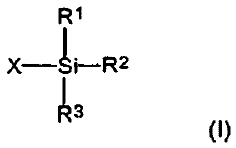 dans laquelle
R¹, R² et R³ sont chacun indépendamment choisis dans le groupe constitué par les groupes alkyle en C₁ à ₂₀, les groupes cycloalkyle en C_{3 à 20} et les groupes aryle en C_{6 à 20} linéaires ou ramifiés ;
X est un groupe ester éthyléniquement insaturé, de préférence un groupe acyloxy éthyléniquement insaturé.

3. Copolymère d'ester de silyle selon la revendication 2, dans lequel le groupe X éthyléniquement insaturé est choisi parmi un groupe acryloyloxy, un groupe méthacryloyloxy, un groupe (méthacryloyloxy)alkylcarboxy, un groupe maléinoyloxy, un groupe fumaroyloxy, un groupe itaconoyloxy et un groupe citraconoyloxy.

4. Copolymère d'ester de silyle selon l'une quelconque des revendications 2 ou 3, dans lequel R¹, R² et R³ sont chacun indépendamment choisis parmi les groupes méthyle, isopropyle, n-butyle, isobutyle et phényle.

5. Copolymère d'ester de silyle selon l'une quelconque des revendications 1 à 4, dans lequel le monomère A est le (méth)acrylate de triisopropylsilyle, le (méth)acrylate de tri-n-butylsilyle ou le (méth)acrylate de triisobutylsilyle.

6. Copolymère d'ester de silyle selon l'une quelconque des revendications 1 à 5, dans lequel le monomère B est défini par la formule générale (II) : 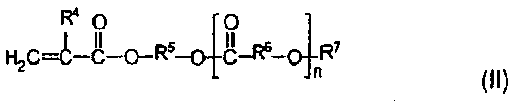 dans laquelle
R⁴ est choisi dans le groupe constitué par un atome d'hydrogène et un groupe méthyle ;
R⁵ est choisi dans le groupe constitué par les groupes alkylène en C_{1 à 10} linéaires, ramifiés ou cycliques ;
R⁶ est choisi dans le groupe constitué par les groupes alkylène en C_{2 à 12} linéaires ou ramifiés ;
R⁷ est choisi dans le groupe constitué par un atome d'hydrogène, les groupes alkyle en C_{1 à 20}, cycloalkyle en C_{3 à 20} et aryle en C_{6 à 20} linéaires ou ramifiés, et -C(O)-R⁸ ;
R⁸ est choisi dans le groupe constitué par les groupes alkyle en C_{1 à 20}, cycloalkyle en C_{3 à 20} et aryle en C₆ à ₂₀ linéaires ou ramifiés ;
n est un nombre entier de 1 à 12, de préférence 1 à 5.

7. Copolymère d'ester de silyle selon la revendication 6, dans lequel R⁶ est un groupe alkylène en C_{3 à 5} et R⁷ est un atome d'hydrogène ; et/ou R⁵ est un groupe alkylène en C_{2 à 4}.

8. Copolymère d'ester de silyle selon l'une quelconque des revendications 1 à 7, dans lequel le monomère (B) est un (méth)acrylate d'hydroxyalkyle modifié par butyrolactone, un (méth)acrylate d'hydroxyalkyle modifié par caprolactone ou un (méth)acrylate d'hydroxyalkyle modifié par valérolactone.

9. Copolymère d'ester de silyle selon l'une quelconque des revendications 1 à 8, dans lequel le monomère (B) est un (méth)acrylate d'hydroxyéthyle modifié par caprolactone.

10. Copolymère d'ester de silyle selon l'une quelconque des revendications 1 à 9, dans lequel le monomère (B) a une masse moléculaire moyenne de 210 à 1 500.

11. Copolymère d'ester de silyle selon l'une quelconque des revendications 1 à 9, dans lequel un ou plusieurs motifs de monomère (A) sont présents dans une quantité de 1 à 99 % en mole du mélange total de monomères, de manière davantage préférée de 10 à 60 % en mole, et de manière préférée entre toutes de 15 à 40 % en mole.

12. Copolymère d'ester de silyle selon l'une quelconque des revendications 1 à 10, dans lequel des motifs d'un ou plusieurs monomères (B) sont présents dans une quantité de 0,1 à 50 % en mole du mélange total de monomères, de manière davantage préférée de 0,5 à 20 % en mole, et de manière davantage préférée de 1 à 10 % en mole.

13. Composition de revêtement antisalissure comprenant un copolymère d'ester de silyle selon l'une quelconque des revendications 1 à 12, et un ou plusieurs autres composants, de préférence un ou plusieurs autres agents biologiquement actifs.

14. Composition de revêtement antisalissure selon la revendication 13, comprenant en outre un ou plusieurs composants choisis parmi d'autres liants (de préférence choisis parmi la colophane et les dérivés de colophane), les pigments, les agents d'allongement et les charges, les agents de déshydratation et les agents siccatifs, les additifs et les solvants.

15. Composition de revêtement antisalissure selon l'une quelconque des revendications 13 et 14, ayant une teneur en composés organiques volatils plus faible que 400 g/L.
